# EUROPEAN PATENT APPLICATION

(11) **EP 3 690 674 A1**
(43) Date of publication of application: **05.08.2020**
(21) Application number: 19154968.2
(22) Date of filing: 01.02.2019
(51) Int. Cl.: G06F 16/783, G06F 16/683, G06F 16/632

(54) **METHOD FOR RECOMMENDING VIDEO CONTENT**

(71) Applicant: Moodagent A/S, 1120 Copenhagen K (DK)
(72) Inventor: Steffensen, Peter Berg, 1120 Copenhagen K (DK); Henderson, Mikael, 1120 Copenhagen K (DK)
(74) Representative: Nordic Patent Service A/S

(57) **Abstract**

A method of recommending video content using a computer-based system (30), the method comprising providing (101) an initial set comprising a plurality of videos (1); extracting (102) a digital audio signal (2) from each of the plurality of videos (1); determining (103) at least one temporal sequence (4) of low-level audio features for each digital audio signal (2) of the plurality of videos (1) by analyzing the digital audio signals (2); calculating (104) an audio similarity index (5) between each of the plurality of videos (1) by comparing their respective at least one temporal sequence (4) of low-level audio features; receiving (105) a query Q comprising reference to a seed video; the seed video being one of the plurality of videos (1); determining (106), for the seed video, a ranking (7) of the rest of the initial set of videos (1) based on their audio similarity index (5) with respect to the seed video; and returning (107), as a reply to the query *Q*, an ordered set of video references according to the ranking (7).

## Description

### TECHNICAL FIELD

The disclosure relates to the field of media recommendation, more particularly to a method and system for analyzing video content and automatically generating video recommendations based on similarities.

### BACKGROUND

As computer technology has improved, the digital media industry has evolved greatly in recent years. Electronic devices such as smartphones, tablets, or desktop computers, can be used to consume music, video and other forms of media content. At the same time, advances in network technology have increased the speed and reliability with which information can be transmitted over computer networks. It has therefore become technically possible for users to stream media content over these networks on demand, as well as to easily and quickly download entire files for consumption.

Online, e.g. streaming, video services exploit these possibilities by allowing users to browse large collections of video content using their electronic devices. According to some reports, in the United States alone, more than 140 million people have watched videos online, while 50 million of these people do so on a weekly basis. This trend has brought a variety of online video services, such as video search, video tagging and editing, video sharing, video advertising, and so on. As a result, today's online users face a daunting volume of video content from a variety of sources serving various purposes, ranging from commercial video services to user generated content, and from paid online movies to video sharing, blog content, IPTV and mobile TV, and choosing from this enormous content can be challenging for the users. There is therefore an increasing demand from users towards online video services to be able to quickly find the most interesting or most relevant video content to watch.

One way to offer interesting or relevant content to the users in an effective way is to use automatic video recommendation systems based on minimal user input, thus saving the users from manually filtering out the unrelated content and ranking the most interesting videos based on a simple user query and/or previously defined user preferences. Many existing online video service providers such as Netflix, Amazon, Hulu, HBO, YouTube, Google Play, iTunes, have some version of this kind of built-in video recommendation service.

One typical approach of these services is to automatically find similarities between videos based on textual information (such as the title, tags, summary, reviews and comments) associated with the videos, and to rank the relevancy of the videos based on user interest information extracted from registered user profiles.

The problem with this approach is that the systems rely on human input which can be erroneous, inaccurate, incomplete or in other ways misleading. Furthermore, when users first start to use a service they will have no information that could be extracted from their profiles regarding their interests, and even later on the gathered information can be incomplete, inaccurate, or in other ways misleading, thus resulting in recommendations that users will find useless or even annoying.

Another approach is to use Collaborative Filtering (CF) based recommendation systems, which employ techniques that make automatic predictions (filtering) about the interests of a user by collecting preferences or taste information from many users (collaborating) based on their user history. However, this approach requires users' active participation and customized algorithms that are able to match people with similar interests. Furthermore, the resulting recommendations will be less objective or even contextually irrelevant, since Collaborative Filtering has no "understanding" of the video content itself.

One prior art approach attempting to solve this problem is using manual editorial curation. While this approach provides a good level of content-awareness, it suffers from lack of scalability, high cost, and editorial subjectivity.

Another, more technical approach is to use computer-based systems to analyze and classify pieces of video content according to semantic concepts and use this classification for determining video similarities. Most of these prior art approaches classify videos using mainly visual information, wherein visual features are extracted from either two-dimensional keyframes or three-dimensional local volumes, and these features are treated as individual static descriptors to train concept classifiers. Among these methods, the ones using the "Bag-of-Words" (BoW) representation are considered state-of-the-art, due to the effectiveness of BoW features in classifying objects and human actions.
In some prior art approaches audio information is also incorporated using a multi-modal fusion strategy as an additional component to facilitate semantic concept classification.

However, these methods require large amounts of computing power and time as well as data storage and communications resources, since the entire digital files of videos need to be stored and transmitted to then be analyzed. Even though processing capacity and effectiveness of computer-based systems have greatly increased in the past years, the amount of digital data to be stored and analyzed by video service providers is also continuously and incrementally growing, thus making it more and more difficult and costly to provide quick and up-to-date recommendations for the users.

Furthermore, due to the nature of the BoW representation that assigns pre-defined classes to certain scenes of the videos, both nuances of emotions and audio characteristics, as well as larger scale correlations are lost, thus resulting in inaccurate or less contextually relevant results.

It is therefore a technical challenge to provide video recommendations that are content-based, objective, contextually relevant, always up-to-date, and able to capture nuances as well as larger scale correlations of emotions and audio characteristics.

Another technical challenge is to provide such video recommendations in a way that is automatic, scalable, and cost- as well as time-effective.

Another technical challenge is to provide such video recommendations as a complement to existing systems, in order to overlay a contextual understanding of video content atop user-based and personal editorial offerings, thereby eliminating contextual-blindness at scale and offering a much richer, contextually-aware content discovery experience.

### SUMMARY

It is an object to provide a method and system for recommending video content using a computer-based system and thereby solving or at least reducing the problems mentioned above.

The foregoing and other objects are achieved by the features of the independent claims. Further implementation forms are apparent from the dependent claims, the description and the figures.

According to a first aspect, there is provided a method of recommending video content using a computer-based system, the method comprising:
providing an initial set comprising a plurality of videos; extracting a digital audio signal from each of the plurality of videos;
determining at least one temporal sequence of low-level audio features for each digital audio signal of the plurality of videos by analyzing the digital audio signals;
calculating an audio similarity index between each of the plurality of videos by comparing their respective at least one temporal sequence of low-level audio features;
receiving a query *Q* comprising reference to a seed video; the seed video being one of the plurality of videos;
determining, for the seed video, a ranking of the rest of the initial set of videos based on their audio similarity index with respect to the seed video; and
returning, as a reply to the query *Q,* an ordered set of video references according to the ranking.

The inventors arrived at the insight that extracting and analyzing the digital audio signal of videos and calculating their similarities based on the low-level audio features determined in a temporal sequence enables a ranking of videos that provides more relevant recommendations for a seed video than other known methods. With this method it becomes possible to capture nuances as well as larger scale correlations of emotions and audio characteristics in videos and thus to provide objective and contextually relevant recommendations of video content.

Furthermore, implementing this method on a a computer-based system enbales providing of recommendations for a large set of continuously updated videos effectively and accurately as the method can be completely automatized and each newly added video can be processed right after receiving in a catalogue, thereby the rankings according to any seed video can be computed in advance of receiving any user query. This provides a fast and dynamic user experience as well as useful results.

In a first possible implementation form of the first aspect the method further comprises the steps of:
dividing each digital audio signal into a plurality of audio segments;
determining at least one temporal sequence of low-level audio features for each audio segment by analyzing the audio segments; and
calculating an audio similarity index between each of the plurality of videos by comparing the respective at least one temporal sequence of low-level audio features of at least one of their audio segments.
Dividing each digital audio signal into a plurality of audio segments provides greater granularity of input data for the method and can provide more accurate end results, however it may also require more resources for computing the ranking.

In a possible implementation form of the first implementation form of the first aspect the plurality of audio segments are non-overlapping, and the plurality of audio segments have equal segment duration *Lₛ,* wherein the segment duration is between 1s < *Lₛ* < 60s, more preferably between 5s < *Lₛ* < 30s, more preferably *Lₛ* = 15 s.

The inventors arrived at the insight that dividing the audio signals into segments with a duration in the above defined ranges provide advantegous results. In a particularly advantageous embodiment the segment durations are 15 s each.

Furthermore, selecting a segment duration from within these ranges, preferably taking into account the total duration of the digital audio signal, ensures that the data used for audio analysis is sufficiently detailed while also compact in data size in order to allow for efficient processing, especially when applying the method on a computer-based system comprising a plurality of CPUs, capable of running multiple processes simultaneously.

The inventors further arrived at the insight that dividing the audio signals so that the resulting segments are not overlapping is especially advantageous when comparing the respective temporal sequences of low-level audio features of the audio segments.

In a possible implementation form of the first implementation form of the first aspect the method further comprises the steps of:
determining the temporal arrangement of the plurality of audio segments for each digital audio signal; and
calculating the audio similarity index between each of the plurality of videos taking into account the temporal arrangement of their respective audio segments.
Taking into account the temporal arrangement of the respective audio segments can provide more relevant end results for the video ranking since it enables determining similarities in the (narrative) structure of videos.

In a second possible implementation form of the first aspect calculating the audio similarity index by comparing the at least one temporal sequence of audio features comprises the steps of:
calculating at least one high-level feature vector *V_{f}* for each digital audio signal or segment by analyzing the at least one temporal sequence of low-level audio features, wherein the elements of the high-level feature vector *V_{f}* each represent a high-level audio feature associated with the digital audio signal or segment, and
calculating the respective pairwise distance *Dₚ* between the high-level feature vectors *V_{f}* in the vector space, wherein the shorter pairwise distance *Dₚ* represents a higher degree of similarity between the respective digital audio signals or segments.

Calculating high-level feature vectors for the audio signals provides and additional layer of abstraction as well as data compression, since these vectors can represent similarities or differences between audio signals (and thus between videos) in an abstract vector space that is derived from the temporal sequences of low-level audio features, which are derived from the audio signals. Calculating audio similarity using these reduced size, high-level feature vectors enables more efficient processing without sacrificing the accuracy or relevancy of results.

In a possible implementation form of the second implementation form of the first aspect each of the high-level feature vectors *V_{f}* comprises *n_{f}* elements, wherein each of the elements is a real or integer number, and represents one of a perceived musical characteristic corresponding to the style, genre, rhythm, tempo, or instrumentation; or a perceived emotional characteristic corresponding to the mood of the respective digital audio signal or segment; and wherein the number of elements is between 1 ≤ *n_{f}* ≤ 256, more preferably between 1 ≤ *n_{f}* ≤ 100, more preferably between 1 ≤ *n_{f}* ≤ 34. Selecting the number of elements of the high-level feature vectors from within these ranges ensures the data used for further processing is sufficiently detailed while also compact in data size in order to allow for efficient processing.

In an embodiment each of the elements are integer numbers. In an embodiment each of the elements are positive integer numbers. In an embodiment each of the elements are positive integer numbers with a value ranging from 1 to 7.
Selecting the values of the elements from within these ranges ensures the data used for further processing is sufficiently detailed while also compact in data size in order to allow for efficient processing.

In a possible implementation form of the second implementation form of the first aspect wherein calculating the respective pairwise distance *Dₚ* between the high-level feature vectors *V_{f}* comprises the step of:
applying Dynamic Time Warping between the high-level feature vectors *V_{f,}*
wherein the shorter pairwise distance *Dₚ* between the respective digital audio signals or segments in the vector space represents a higher degree of similarity.

In a possible implementation form of the second implementation form of the first aspect calculating the at least one high-level feature vector *V_{f}* for each digital audio signal or segment further comprises the steps of:
calculating at least one 2-dimensional low-level audio feature matrix for each digital audio signal or segment based on their respective at least one temporal sequence of low-level audio features,
feeding at least one of the low-level audio feature matrices or the digital audio signal or segment into a Machine Learning engine; and
calculating, using the respective output of the Machine Learning engine, at least one high-level feature vector *V_{f}* for each digital audio signal or segment;
wherein at least one of the low-level audio features is a Mel Frequency Cepstrum Coefficient vector, a Mel-spectrogram, a Constant-Q transform, a Variable-Q transform, or a Short Time Fourier Transform.

In an embodiment, the 2-dimensional low-level audio feature matrix comprises a vertical concatenation of the Mel-spectrogram of the audio signal and its subsequent first and second derivatives.

Using a Machine Learning (ML) engine for calculating the high-level feature vectors is particularly advantageous since it enables iterative adjustment through training of the ML engine. With a well-trained ML engine for the specific task it becomes possible to determine the high-level feature vectors for each audio signal with great accuracy, which results in greatly improved end results for the method.

In a possible implementation form of the first aspect the videos in the initial set comprise pieces of metadata, each piece of the metadata comprising textual information associated with the respective video such as title, description, tags, keywords, or MPEG-7 metadata; and the method further comprises the steps of:
extracting metadata from each of the plurality of videos;
calculating a metadata similarity index between each of the plurality of videos based on the degree of similarity between their respective metadata;
wherein the ranking of the rest of the initial set of videos is determined by ensembling the calculations of the respective similarity indexes of each video with respect to the seed video.

Taking into account metadata comprising textual information associated with the videos such as title, description, tags, keywords, or MPEG-7 metadata enables further customizing the end results of the method and in some cases further improving the accuracy of the recommendations. In addition, it enables providing video recommendations as a complement to existing systems, in order to overlay a contextual understanding of video content atop existing recommendation engines or databases, thereby eliminating contextual-blindness at scale and offering a much richer, contextually-aware content discovery experience.

In a possible implementation form of the first aspect the method further comprises the steps of:
collecting online data by analyzing online sources referring to the plurality of videos, the online data representing similarities between the plurality of videos based on at least one of Collaborative Filtering, and associated editorial content;
calculating an online similarity index between each of the plurality of videos based on the online data;
wherein the ranking of the rest of the initial set of videos is determined by ensembling the calculations of the respective similarity indexes of each video with respect to the seed video.
Taking into account online data representing similarities between a plurality of videos, whether it is based on Collaborative Filtering or associated editorial content (such as movide databases e.g. IMDB or OMDB) enables further customizing the end results of the method and in some cases further improving the accuracy of the recommendations. In addition, it enables providing video recommendations as a complement to existing systems, in order to overlay a contextual understanding of video content atop existing editorial offerings, thereby eliminating contextual-blindness at scale and offering a much richer, contextually-aware content discovery experience.

In a possible implementation form of the first aspect the method further comprises the steps of:
receiving the query *Q* from a user;
extracting user preference data associated with the user from a user profile database, the user preference data representing the given user's preferences regarding the ranking of the plurality of videos;
adjusting the ranking of the rest of the initial set of videos according to the user preference data;
returning to the user, as a reply to the query *Q,* an ordered set of videos according to the adjusted ranking.
Taking into account user preference data associated with a particular user and representing the given user's preferences regarding the ranking of a plurality of videos enables further customizing the end results of the method according to a specific taste profile, and in some cases also further improving the accuracy of the recommendations. In addition, it enables providing video recommendations as a complement to existing systems wherein a user might have already established a taste profile, thereby offering a much richer, contextually-aware content discovery experience without the need to build a new taste profile from scratch.

In a possible implementation form of the first aspect the method further comprises the steps of:
extracting a digital visual signal from each of the plurality of videos;
optionally dividing each digital visual signal into a plurality of visual segments, according to the segmentation of the respective digital audio signal of the video; processing the digital visual signals to calculate at least one visual feature vector *V_{fv}* for each digital visual signal or segment;
calculating a visual similarity index between each of the plurality of videos based on the respective pairwise distance *Dₚᵥ* between their associated visual feature vectors *V_{fv}* in the vector space, wherein the shorter pairwise distance *Dₚᵥ* results in a higher visual similarity index between the respective videos;
wherein the ranking of the rest of the initial set of videos is determined by ensembling the calculations of the respective similarity indexes of each video with respect to the seed video.
Taking into account the digital visual signal from each of the plurality of videos enables further customizing the end results of the method, and in some cases also further improving the accuracy of the recommendations. In addition, it enables providing video recommendations as a complement to existing systems, in order to overlay a contextual understanding of video content atop visual content based offerings, thereby offering a much more complex, contextually-aware content discovery experience.

In a possible implementation form of the first aspect determining the ranking of the rest of the initial set of videos is solely based on the audio similarity index of each video with respect to the seed video.
Determining the ranking of the videos solely based on their audio signal provides a unique and cost-efficient way of providing video recommendations. Since it is only the audio signal that needs to be processed it also means that significantly less storage is needed for storing the input data for the method compared to the storage that would be needed for whole video files.

According to a second aspect, there is provided a computer-based system for recommending video content, the system comprising:
a storage medium configured to store a plurality of videos;
an input device configured to receive a query *Q* from a user comprising reference to a seed video, the seed video being one of the plurality of videos;
a processor configured to execute the steps of a method according to any one of claims 1 to 13; and
a display device controlled by the processor and configured to show to the user, as a reply to the query *Q,* an ordered set of videos according to the ranking determined by executing the steps of the method.
Implementing the method on a a computer-based system enbales providing of recommendations for a large set of continuously updated videos effectively and accurately as the method can be completely automatized and each newly added video can be processed right after receiving in a catalogue, thereby the rankings according to any seed video can be computed in advance of receiving any user query. and be stored in the storage medium for quick retrieval. This provides a fast and dynamic user experience as well as useful results.

In a first possible implementation form of the second aspect the display device is configured to display, as part of a user interface, a seed video selector area comprising a plurality of visual representations *T_{1..n},* each visual representation *T* representing one video from the initial set of videos,
the input device is configured to allow a user to select one of the visual representations *T* from the seed video selector area, and to send a query *Q* to the computer-based system comprising a reference to a seed video according to the selected visual representation, and
the display device is further configured to display, as part of the user interface, a video recommendation area comprising a plurality of visual representations *T_{1..m},* each visual representation *T* representing one video from the initial set of videos, wherein the plurality of visual representations *T_{1..m}* are ordered according to the ranking determined by executing the steps of the method according to any one of the possible implementation forms of the first aspect.
Implementing a user interface as described above provides an efficient way for a user to interact with the different modules of the computer-based system and a clear and clean overview of the ranking of videos after selecting a seed video. The user interface further provides a dynamic overview of how selecting different seed videos affects the ranking of the rest of the videos of the initial set.

In a possible implementation form of the first implementation form of the second aspect the display device is further configured to display, as part of the user interface, a recommendation adjustment area comprising visual means for dynamically adjusting the order of the visual representations *T_{1..m}* in the video recommendation area. In an embodiment the adjustment is achieved by adjusting the weight with which user preference data is taken into account when calculating the ranking. In another embodiment the adjustment is achieved by adjusting the weight with which different similarity indexes, such as a metadata similarity index, an online similarity index, or a visual similarity index is taken into account during ensembling calculations for determining the ranking. In an embodiment the visual means comprise a graphical element, such as a slider, for allowing a user to horizontally move a marker and thereby execute the adjustment. In an embodiment the visual means comprise a numerical input field allowing a user to input a number between 1 and 100 representing the proportion in percentages between an original ranking and an adjusted ranking of the video recommendations.
The additional recommendation adjustment area of the user interface provides a further option for users to influence the ranking of the video recommendations based on their individual taste profile, the metadata of the videos, online data associated with the videos such as IMDB or OMDB data, Collaborative Filtering data associated with the social circles of the users, or the visual data extracted from the videos. The users can then also see how their actions of adjusting a slider or inputting a proportional percentage number affects the final ranking of the videos. This provides not only a better user experience compared to user interfaces existing on computer-based systems but a quicker, more dynamic and more efficient way for users to select a final ranking of recommendations that fits their requirements at a particular moment.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a flow diagram of a method of recommending video content using a computer-based system in accordance with the first aspect;
Fig. 2 shows a flow diagram of a method in accordance with a first implementation form of the first aspect, wherein each audio signal is divided into a plurality of audio segments;
Fig. 3 shows a flow diagram illustrating the steps of calculating the audio similarity index in accordance with possible implementation forms of the second implementation form of the first aspect;
Fig. 4 shows a flow diagram illustrating the steps of calculating a high-level feature vector *V_{f}* for a digital audio signal in accordance with a possible implementation form of the second implementation form of the first aspect;
Fig. 5 shows a flow diagram illustrating the steps of determining the ranking of the initial set of videos, taking into account metadata extracted from each video, according to a possible implementation form of the first aspect.
Fig. 6 shows a flow diagram illustrating the steps of determining the ranking of the initial set of videos, taking into account online data from online sources, according to a possible implementation form of the first aspect.
Fig. 7 shows a flow diagram illustrating the steps of determining the ranking of the initial set of videos, taking into account user preference data extracted from a user profile database, according to a possible implementation form of the first aspect.
Fig. 8 shows a flow diagram illustrating the steps of determining the ranking of the initial set of videos, taking into account digital visual signals extracted from each of video, according to a possible implementation form of the first aspect.
Fig. 9 shows a block diagram of a computer-based system in accordance with a possible implementation form of the second aspect.
Fig. 10A and 10B shows illustrative representations of a user interface to be displayed by the display device illustrated on Fig. 9, in accordance with a possible implementation form of the second aspect.

### DETAILED DESCRIPTION

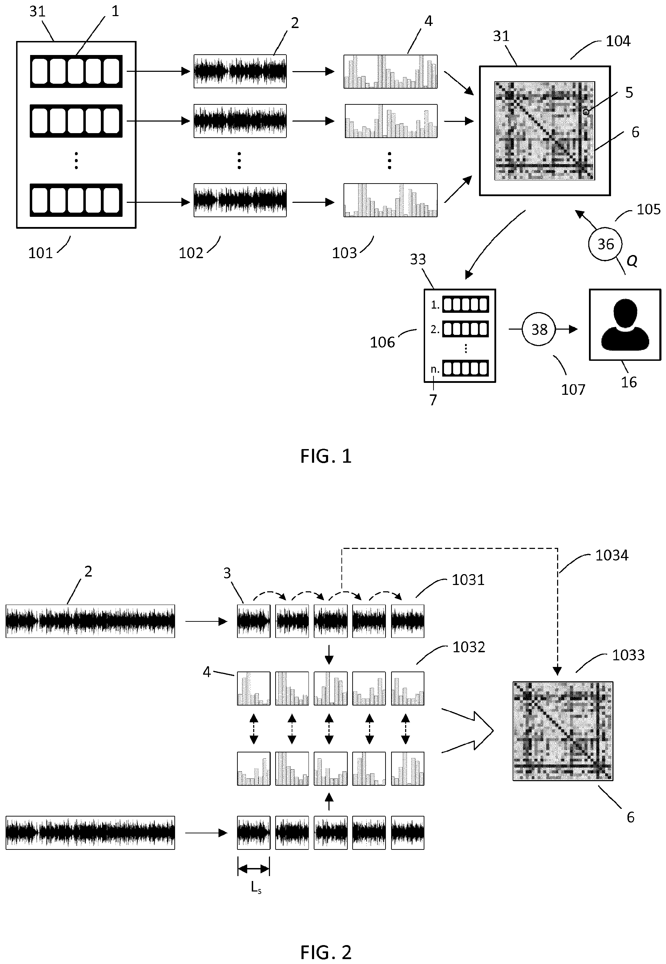

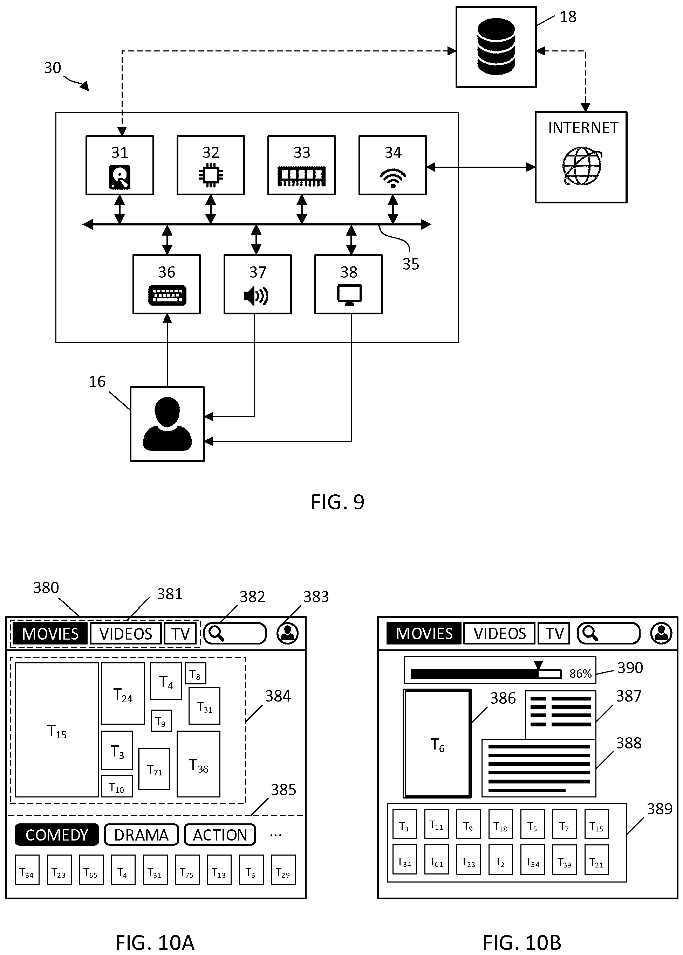

Fig. 1 shows a flow diagram of a method for recommending video content in accordance with the present disclosure, using a computer or computer-based system such as for example the system shown on Fig. 9.

In the first step 101 there is provided an initial set of a plurality of videos 1.

In this disclosure, the term 'video' in this context refers to a digital medium, such as e.g. a video file or record, for the recording, copying, playback, broadcasting, and display of moving visual media. The videos can be of any duration and encoded by any known video encoding method or standard. A video file normally consists of a container containing a digital visual signal in a visual coding format alongside a digital audio signal in an audio coding format. The container may also contain synchronization information, subtitles, and metadata such as title. Videos are generally stored using lossy compression to reduce the video file size.

The initial set of videos contains at least three videos (so that a ranking can be established based on selecting a seed video between the remaining plurality of videos), more preferably at least ten videos. In some embodiments, especially when using a Machine Learning engine, a larger set of videos is preferred to improve the accuracy of the method. The set of videos can be provided locally on a storage medium 31 of the computer-based system 30, or can be stored on a remote data server.

In a next step 102 a digital audio signal 2 is extracted from each of the plurality of videos 1.

In this disculsure "digital audio signal" refers to any sound that has been recorded or converted into digital form, where the sound wave is encoded as numerical samples in continuous sequence. The average number of samples obtained in one second is called the sampling frequency. An exemple of an encoding format for digital audio signals generally referred to as "CD audio quality" uses a sampling rate of 44.1 thousand samples per second, however it should be understood that any suitable sampling rate can be used for storing the digital audio signal. In a particularly advantageous implementation the audio signal is sampled at 22050 Hz and converted to mono by averaging the left and right audio channels.

In this disclosure "digital audio signal" refers to the audio part stored in the container of a video file in an audio coding format as described above.

The digital audio signals can extracted from the containers of the video files using any known digital audio extraction method and can be stored on a storage medium 31 of the computer-based system 30 from where it can be further processed.

In a next step 103 at least one temporal sequence 4 of low-level audio features is determined for each digital audio signal 2.

The term low-level audio feature' in this context refers to numerical values describing the contents of an audio signal on a signal level (as opposed to high-level features referring to an abstracted, symbolic level) and are determined according to different kinds of inspections such as temporal, spectral, etc. In particular the temporal sequence of low-level audio features in this context may refer to a Mel-spectrogram, a Mel Frequency Cepstrum Coefficient (MFCC) vector, a Constant-Q transform, a Variable-Q transform, or a Short Time Fourier Transform (STFT). Further examples may include, but are not limited to, those of fast Fourier transforms (FFTs), digital Fourier transforms (DFTs), Modified Discrete Cosine Transforms (MDCTs), Modified Discrete Sine Transforms (MDSTs), Quadrature Mirror Filters (QMFs), Complex QMFs (CQMFs), discrete wavelet transforms (DWTs), or wavelet coefficients.

The object of this feature extraction step is to transform the input audio signal into a new space of variables that simplifies further analysis and processing.

In a next step 104 an audio similarity index 5 between each of the plurality of videos 1 is calculated by comparing their respective temporal sequence (s) 4 of low-level audio features. The audio similarity index 5 represents the similarity of the audio signals extracted from and associated with the videos. The details of the calculation are explained below in detail. The audio similarity indexes 5 may be stored (and optionally visualized) in the form of an audio similarity matrix 6, wherein each row and column represents one of the plurality of videos, and each value in the matrix 6 represents the audio similarity index 5 between the two videos that its column and row represents. Thus, the diagonal values of the the matrix 6 will always be of highest value as they show the highest possible degree of (self-)similarity.

In a next step 105 a query Q comprising reference to a seed video is received; wherein the seed video is one of the plurality of videos 1. The query Q may originate from a user 16 and received via an input device 36. The user 16 may input the query Q using a dedicated user interface such as the user interface 380 explained below in detail.

In a next step 106 a ranking 7 of the rest of the initial set of videos 1 is determined based on their audio similarity index 5 with respect to the seed video. Possible implementations of determining the ranking 7 are explained below in detail. The ranking 7 can be temporarily stored in a memory 33 of the computer-based system 30.

In a next, final step 107 an ordered set of video references according to the ranking 7 are returned as a reply to the query Q. The ranking can be read from the memory 33 and displayed to the user 16 via the display device 38 with the help of a dedicated user interface such as the user interface 380 explained below in detail.

Fig. 2 shows a flow diagram illustrating a possible implementation of the method, wherein each audio signal is divided into a plurality of audio segments.

In this implementation, steps and features that are the same or similar to corresponding steps and features previously described or shown herein are denoted by the same reference numeral as previously used for simplicity.

In a first step 1031 each digital audio signal 2 is divided into a plurality of audio segments 3. These audio segments 3 can be overlapping or non-overlapping, and have differing or equal segment durations between 1s < *Lₛ* < 60s, more preferably between 5s < *Lₛ* < 30s. In a particularly advantageous example the audio segments 3 are non-overlapping and have equal segment duration *Lₛ* = 15 s.

In a next step 1032 at least one temporal sequence 4 of low-level audio features for each audio segment 3 is determined by analyzing the audio segments 3 in accordance with the feature extraction step 103 explained above.

In a next step 1033 an audio similarity index 5 between each of the plurality of videos 1 is calculated by comparing the respective at least one temporal sequence 4 of low-level audio features of at least one of their audio segments 3. The calculation and storage of data is similar to the audio similarity index calculation step 104 explained above, only with more complex calculations due to the increased granularity.

In a next, optional step 1034 the temporal arrangement of the plurality of audio segments 3 for each digital audio signal 2 is also determined, and taken into account when calculating 1033 the audio similarity index 5 between each of the plurality of videos 1.

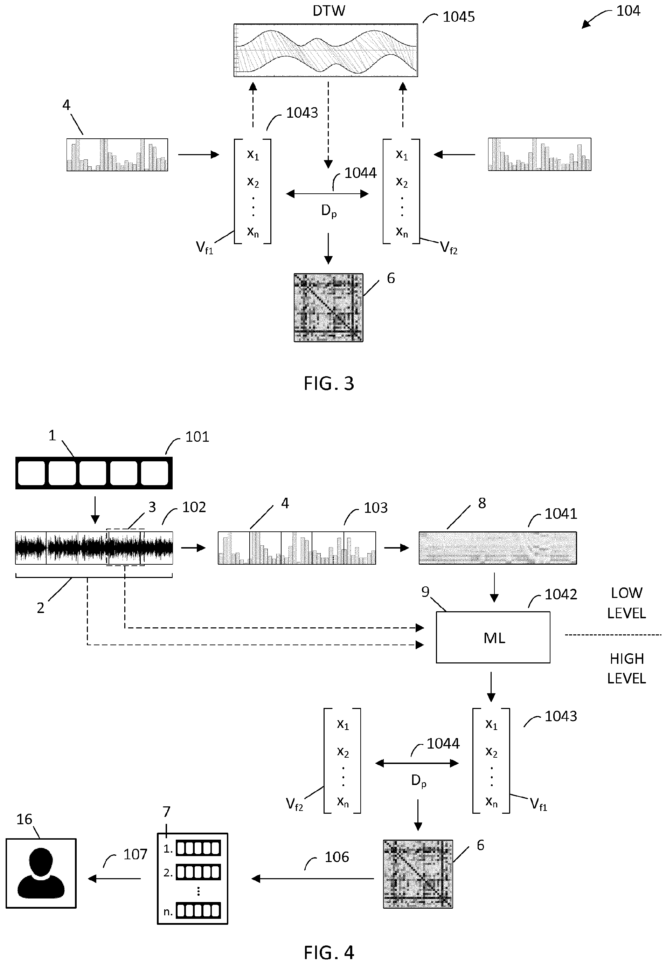

Fig. 3 shows a flow diagram illustrating core steps of calculating the audio similarity index 104 in accordance with a possible implementation of the method. In this implementation, steps and features that are the same or similar to corresponding steps and features previously described or shown herein are denoted by the same reference numeral as previously used for simplicity.

In a first step 1043 at least one high-level feature vector *V_{f}* for each digital audio signal 2 or segment 3 is calculated by analyzing its at least one temporal sequence 4 of low-level audio features. The elements of the high-level feature vector *V_{f}* each represent a high-level audio feature associated with the digital audio signal 2 or segment 3.

As explained above the term 'low-level audio feature' in this context refers to numerical values describing the contents of an audio signal on a signal level and are determined according to different kinds of inspections (such as temporal, spectral, etc.), whereas 'high-level audio feature' refers to numerical values on an abstracted, symbolic level determined from those low-level audio features and may represent a perceived musical characteristic corresponding to the style, genre, rhythm, tempo, or instrumentation; or a perceived emotional characteristic corresponding to the mood of the respective digital audio signal 2 or segment 3.

Each of the high-level feature vectors *V_{f}* comprises *n_{f}* elements, and each of the elements is a real or integer number. The number of elements may range between 1 ≤ nf ≤ 256, more preferably between 1 ≤ nf ≤ 100. In an advantageous example the number of elements is between 1 ≤ nf ≤ 34.

In a next step 1044 the respective pairwise (Euclidean) distance *Dₚ* between the high-level feature vectors *V_{f}* is calculated in the vector space. Here, the shorter pairwise (Euclidean) distance *Dₚ* represents a higher degree of similarity between the respective digital audio signals 2 or segments 3.

In an embodiment the respective pairwise distances *Dₚ* between the high-level feature vectors *V_{f}* are calculated with the inclusion of an optional step 1045 whereby Dynamic Time Warping DTW is applied between the high-level feature vectors *V_{f}*. Similarly as above, the shorter pairwise (Euclidean) distance *Dₚ* between the respective digital audio signals 2 or segments 3 in the vector space represents a higher degree of similarity.

Fig. 4 shows a flow diagram illustrating the remaining steps of calculating a high-level feature vector *V_{f}* for a digital audio signal in accordance with a possible implementation of the method. In this implementation, steps and features that are the same or similar to corresponding steps and features previously described or shown herein are denoted by the same reference numeral as previously used for simplicity.

In a first step 1041 at least one 2-dimensional low-level audio feature matrix 8 for each digital audio signal 2 or segment 3 is calculated based on their respective at least one temporal sequence 4 of low-level audio features.

In a next step 1042 at least one of the low-level audio feature matrices 8 or the digital audio signal 2 or segment 3 is fed into a Machine Learning (ML) engine.

In a next step 1043 at least one high-level feature vector *V_{f}* is calculated for each digital audio signal 2 or segment 3 using the respective output of the ML engine.

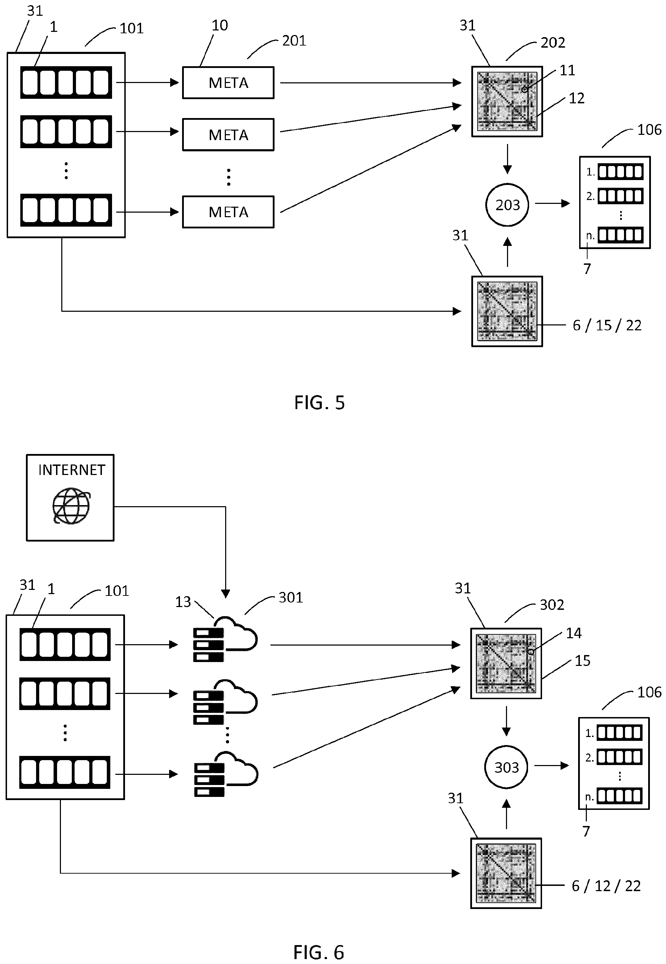

Fig. 5 shows a flow diagram illustrating the steps of determining the ranking of the initial set of videos taking into account metadata extracted from each video in accordance with a possible implementation of the method. In this implementation, steps and features that are the same or similar to corresponding steps and features previously described or shown herein are denoted by the same reference numeral as previously used for simplicity.

In a first step 201 after providing 101 an initial set of a plurality of videos 1 metadata 10 from each of the plurality of videos 1 is extracted. As explained above the containers of the videos 1 in the initial set may comprise pieces of metadata 10. A piece of the metadata 10 may refer to any kind of textual information about the content of the respective video such as title, description, tags, keywords, or MPEG-7 metadata, as well as in the case of e.g. a movie the transcripts of conversations, or text descriptions of its scenes. There are two sources in which video metadata is usually derived: operational gathered metadata which contains information about the content produced, such as the type of equipment, software, date, and location; and human-authored metadata which may improve search engine visibility, discoverability, audience engagement, and may provide advertising opportunities to video publishers. Thus, video metadata can be created either by automated information processing or by manual work.

In a next step 202 a metadata similarity index 11 between each of the plurality of videos 1 is calculated based on the degree of similarity between their respective metadata 10.

The calculation of the metadata similarity index 11 may happen in a similar fashon as the calculations explained above in connection with calculating the audio audio similarity index 5 or using any other knwown method for calculating similarities between pieces of textual information. The resulting metadata similarity index 11 may be stored in a metadata similarity matrix 12. The metadata similarity matrix 12 may then be physically stored on a storage medium 31 of the computer-based system 30.

In a next step 203 the calculations of the respective similarity indexes of each video are ensembled to determine 106 the ranking 7 of the rest of the initial set of videos 1 with respect to the seed video. The similarity indexes may refer to any similarity index other than the metadata similarity index that has been calculated in the manners explained in the present disclosure, such as: an audio similarity index, an online similarity index, or a visual similarity index.

Fig. 6 shows a flow diagram illustrating the steps of determining the ranking of the initial set of videos taking into account online data from online sources in accordance with a possible implementation of the method. In this implementation, steps and features that are the same or similar to corresponding steps and features previously described or shown herein are denoted by the same reference numeral as previously used for simplicity.

In a first step 301 after providing 101 an initial set of a plurality of videos 1 online data 13 is collected by analyzing online sources referring to the plurality of videos 1. The online data 13 may represent similarities between the plurality of videos 1 based on Collaborative Filtering (CF), or associated editorial content.
Collaborative Filtering (CF) generally refers to a method of making automatic predictions (filtering) about the interests of a user by collecting preferences or taste information from many users (collaborating). The underlying assumption of the collaborative filtering approach is that if a person A likes the same type or piece of content as a person B in a particular context (such as music), A is more likely to have similar taste as B in a different context (such as movies) than that of a randomly chosen person. For example, a collaborative filtering recommendation system for television tastes could make predictions about which television show a user should like given a partial list of that user's tastes (likes or dislikes. This means that these predictions are specific to the user, but use information collected from many other users. Associated editorial content refers to official or user-generated content that can be associated with a video, such as reviews, articles, or other kinds of textual content to be found online that may serve as a basis for deriving similarities (e.g. based on classification, review score, etc.). The two preferred databases for collecting such information for the method are IMDB and OMDB.

In a next step 302 an online similarity index 14 between each of the plurality of videos 1 is calculated based on the degree of similarity between their respective online data 13. The calculation of the online similarity index 14 may happen in a similar fashon as the calculations explained above in connection with calculating the audio audio similarity index 5 or using any other knwown method for calculating similarities between pieces of textual information. The resulting online similarity index 14 may be stored in an online similarity matrix 15. The online similarity matrix 15 may then be physically stored on a storage medium 31 of the computer-based system 30.

In a next step 303 the calculations of the respective similarity indexes of each video are ensembled to determine 106 the ranking 7 of the rest of the initial set of videos 1 with respect to the seed video. The similarity indexes may refer to any similarity index other than the online similarity index that has been calculated in the manners explained in the present disclosure, such as: an audio similarity index, a metadata similarity index, or a visual similarity index.

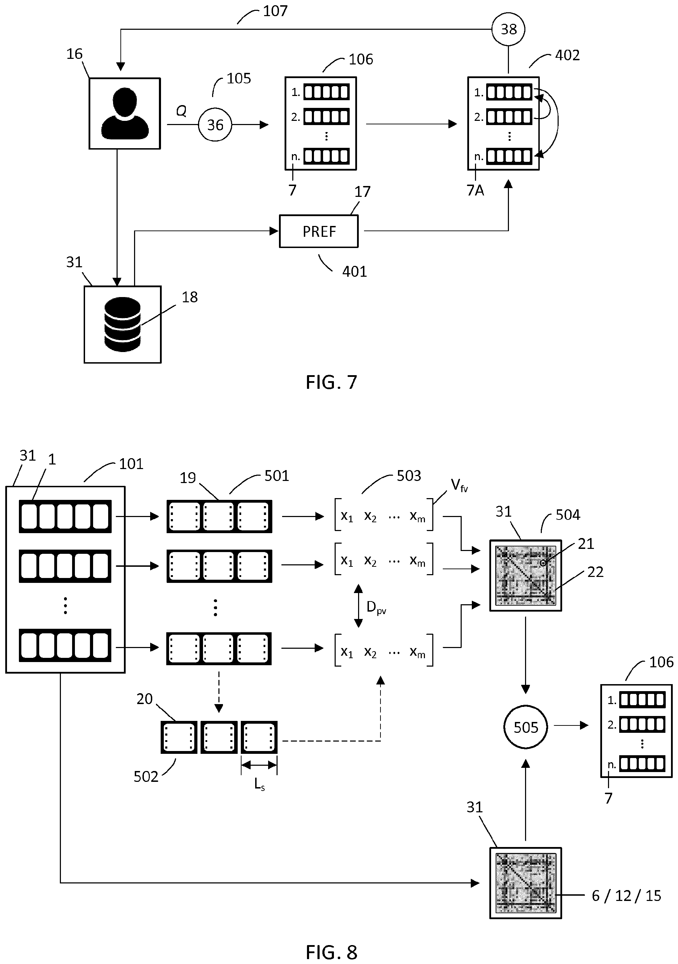

Fig. 7 shows a flow diagram illustrating the steps of determining the ranking of the initial set of videos taking into account user preference data extracted from a user profile database in accordance with a possible implementation of the method. In this implementation, steps and features that are the same or similar to corresponding steps and features previously described or shown herein are denoted by the same reference numeral as previously used for simplicity.

In a first step 401 after receiving 105 a query Q from a user 16, user preference data 17 associated with the user 16 is extracted from a user profile database 18. In the present example the user profile database 18 is stored on a storage medium 31 of the computer-based system 30 and can thus be directly accessed upon receiving the query Q. However, in other possible embodiments the user profile database 18 can also be stored on a server that is configured to store and provide data to a client device such as the computer-based system 30. The user preference data 17 refers to any kind of information that represents the given user's taste that can be translated into preferences regarding the ranking 7 of the plurality of videos 1. The preference data 17 can be derived from online profiles that the user created on other 3^{rd} party services, such as a music streaming service.

In a next step 402 the ranking 7 of the rest of the initial set of videos 1 is adjusted according to the user preference data 17. This adjustment can be done automatically by averaging or assigning weights to certain sources of information. The adjustment can also be done manually via a user interface 380 in a manner explained below. The result of the adjustment is an adjusted ranking 7A of the videos that can be stored on a memory 33 of the computer-based device 30.

In a next step 107 an ordered set of videos 1 according to the adjusted ranking 7A is returned to the user 16, as a reply to the query Q. The ranking can be read from the memory 33 and displayed to the user 16 via the display device 38 with the help of a dedicated user interface such as the user interface 380 explained below in detail.

Fig. 8 shows a flow diagram illustrating the steps of determining the ranking of the initial set of videos taking into account digital visual signals extracted from each of video in accordance with a possible implementation of the method. In this implementation, steps and features that are the same or similar to corresponding steps and features previously described or shown herein are denoted by the same reference numeral as previously used for simplicity.

In a first step 501 after providing 101 an initial set of a plurality of videos 1 a digital visual signal 19 is extracted from each of the plurality of videos 1. As explained above the container of the video files in the initial set comprises digital visual signals 19 alongside digital audio signals 2 and other optional content such as synchronization information, subtitles, and metadata. These digital visual signals 19 can be extracted from the video file containers by any commonly known method.

In a next optional step 502 each digital visual signal 19 is divided into a plurality of visual segments 20. The division is determined in accordance with the segmentation of the respective digital audio signal 2 of the video as explained in detail above, with a resultin visual segment duration *Lₛ*. These visual segments 20 can thus also be overlapping or non-overlapping, and have differing or equal segment durations between 1s < *Lₛ* < 60s, more preferably between 5s < *Lₛ* < 30s. In a particularly advantageous example the visual segments 20 are also non-overlapping and have equal segment durations of *Lₛ* = 15 s.

In a next step 503 the digital visual signals 19 are processed to calculate 503 at least one visual feature vector *V_{fv}* for each digital visual signal 19 or segment 20. The calculation of the visual feature vector *V_{fv}* may happen in a similar fashon as the calculations explained above in connection with calculating the feature vectors *V_{f}*.

In a next step 504 a visual similarity index 21 is calculated between each of the plurality of videos 1 based on the respective pairwise distance *Dₚᵥ* between their associated visual feature vectors *V_{fv}* in the vector space. Here the shorter pairwise distance *Dₚᵥ* results in a higher visual similarity index 21 between the respective videos 1. The resulting visual similarity index 21 may be stored in a visual similarity matrix 22. The visual similarity matrix 22 may then be physically stored on a storage medium 31 of the computer-based system 30.

In a next step 505 the calculations of the respective similarity indexes of each video are ensembled to determine 106 the ranking 7 of the rest of the initial set of videos 1 with respect to the seed video. The similarity indexes may refer to any similarity index other than the visual similarity index that has been calculated in the manners explained in the present disclosure, such as: an audio similarity index, a metadata similarity index, or an online similarity index.

Fig. 9 shows a schematic view of an illustrative computer-based system 30 in accordance with the present disclosure. The computer-based system 30 can include a storage medium 31, a processor 32, a memory 33, a communications circuitry 34, a bus 35, an input interface 36, an audio output 37, and a display 38. The computer-based system 30 can include other components not shown in Fig. 9, such as a power supply for providing power to the components of the computer-based system. Also, while only one of each component is illustrated, the computer-based system 30 can include more than one of some or all of the components.
A storage medium 31 stores information and instructions to be executed by the processor 32. The storage medium 31 can be any suitable type of storage medium offering permanent or semi-permanent memory. For example, the storage medium 31 can include one or more storage mediums, including for example, a hard drive, Flash, or other EPROM or EEPROM. As described in detail above, the storage medium 31 can be configured to store digital video signals of a plurality of videos 1 and digital audio signals 2 that may originate from being extracted from the videos 1 using the computer-based system 30, in accordance with the present disclosure.

A processor 32 controls the operation and various functions of system 30. As described in detail above, the processor 32 can control the components of the computer-based system 30 to execute a method of recommending video content in accordance with the present disclosure. The processor 32 can include any components, circuitry, or logic operative to drive the functionality of the computer-based system 30. For example, the processor 32 can include one or more processors acting under the control of an application.

In some embodiments, the application can be stored in a memory 33. The memory 33 can include cache memory, Flash memory, read only memory, random access memory, or any other suitable type of memory. In some embodiments, the memory 33 can be dedicated specifically to storing firmware for a processor 32. For example, the memory 33 can store firmware for device applications.

A bus 35 may provide a data transfer path for transferring data to, from, or between a storage medium 31, a processor 32, a memory 33, a communications circuitry 34, and some or all of the other components of the computer-based system 30. A communications circuitry 34 enables the computer-based system 30 to communicate with other devices, such as a server. For example, communications circuitry 34 can include Wi-Fi enabling circuitry that permits wireless communication according to one of the 802.11 standards or a private network. Other wired or wireless protocol standards, such as Bluetooth, can be used in addition or instead.

An input interface 36, audio output 37, and display 38 provides a user interface for a user to interact with the computer-based system 30.

The input interface 36 may enable a user to provide input and feedback to the computer-based system 30. The input interface 36 can take any of a variety of forms, such as one or more of a button, keypad, keyboard, mouse, dial, click wheel, touch screen, or accelerometer.

An audio output 37 provides an interface by which the computer-based system 30 can provide music and other audio elements to a user. The audio output 37 can include any type of speaker, such as computer speakers or headphones.

A display 38 can present visual media and can be configured to show a user interface 380 to the user. A display 38 can include, for example, a liquid crystal display, a touchscreen display, or any other type of display.

The computer-based system 30 can communicate with, or further comprise a user profile database 18. The user profile database 18 can be stored on a server that is configured to store and provide data to a client device such as the computer-based system 30. The server can store media and other data, such as user preference data 17, and the server can receive data download requests from a client device. The server can communicate with the client device over a communications link whhich can include any suitable wired or wireless communications link, or combinations thereof, by which data may be exchanged. For example, the communications link can include a satellite link, a fiber-optic link, a cable link, an Internet link, or any other suitable wired or wireless link.

Fig. 10A and 10B show schematic views of an illustrative user interface 380 implemented to be displayed by the display device 38 of the computer-based system 30 in accordance with the present disclosure.

Fig. 10A shows an exemplary embodiment of the user interface 380 configured to be shown on the display device 38.

The user interface 380 may comprise a header menu 381 comprising menu buttons with text displayed on them such as 'MOVIES', 'VIDEOS', 'TV' that represent different initial sets of videos 1 to choose from.
The user interface 380 may further comprise a search bar 382 that enables a user 16 to manually enter a search string when looking for a particular seed video to start with.

The user interface 380 may further comprise a profile area 383 which can lead to an information page about the user 16 comprising their settings, personal video preferences, etc. The user interface 380 comprises a seed video selector area 384 comprising a plurality of visual representations *T_{1..n},* each visual representation *T* representing one video from an initial set of videos 1. The visual representations *T_{1..n}* may have equal or different sizes according to initial recommendation values that may be associated with them as preset values. Each visual representation *T* may be in the form of a cover image that generally is associated with the represented video to make a selection by a user 16 easier and straightforward without the need of any further information (such as metadata). The user 16 can select one of the visual representations *T* of the videos 1 from the seed video selector area 384 that results in sending a query *Q* to the computer-based system 30 comprising a reference to a seed video based according to the selected visual representation.

The user interface 380 may further comprise a genre collection area 385 that may comprise menu buttons with text displayed on them such as 'COMEDY', DRAMA, 'ACTION' that represent different initial groupings of videos 1 to choose from according to pre-assigned genre values.

Fig. 10B shows an exemplary embodiment of the user interface 380 that is configured to display, as a result of the user 16 selecting a selected visual representation 386 of a seed video, a video recommendation area 389 comprising a plurality of visual representations *T_{1..m},* wherein each visual representation *T* represents one video 1 from the initial set of videos 1, and wherein the plurality of visual representations *T_{1..m}* are ordered according to a ranking 7 determined by executing the steps of a method for recommending video content in accordance with the present disclosure.

The user interface 380 may further comprise the selected visual representation 386 of a seed video in the form of a cover image that is associated with the seed video, a metadata display area 387 for showing to the user 16 information from the metadata of the seed video (such as title, duration, etc.), and a summary display area 388 for showing to the user 16 a summary of the seed video content or other relevant content-related information.

The user interface 380 may further comprise a recommendation adjustment area 390 comprising visual means for dynamically adjusting the order of the visual representations *T_{1..m}* in the video recommendation area 389. This adjustment can be achieved by adjusting the weight with which user preference data 17 is taken into account when calculating the ranking 7, or adjusting the weight with which different similarity indexes, such as a metadata similarity index, an online similarity index, or a visual similarity index is taken into account during ensembling calculations for determining the ranking 7. The visual means may comprise a graphical element, such as a slider, for allowing a user to horizontally move a marker and thereby execute the adjustment. The visual means may also comprise a numerical input field allowing a user 16 to input a number between 1 and 100 representing the proportion in percentages between an original ranking 7 and an adjusted ranking 7A of the video recommendations.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope.

## Claims

1. A method of recommending video content using a computer-based system (30), the method comprising:
providing (101) an initial set of a plurality of videos (1); extracting (102) a digital audio signal (2) from each of said plurality of videos (1);
determining (103) at least one temporal sequence (4) of low-level audio features for each digital audio signal (2) of said plurality of videos (1) by analyzing said digital audio signals (2);
calculating (104) an audio similarity index (5) between each of said plurality of videos (1) by comparing their respective at least one temporal sequence (4) of low-level audio features;
receiving (105) a query Q comprising reference to a seed video; said seed video being one of said plurality of videos (1) ;
determining (106), for said seed video, a ranking (7) of the rest of the initial set of videos (1) based on their audio similarity index (5) with respect to said seed video; and
returning (107), as a reply to said query Q, an ordered set of video references according to said ranking (7).

2. A method according to claim 1, further comprising:
dividing (1031) each digital audio signal (2) into a plurality of audio segments (3);
determining (1032) at least one temporal sequence (4) of low-level audio features for each audio segment (3) by analyzing said audio segments (3); and
calculating (1033) an audio similarity index (5) between each of said plurality of videos (1) by comparing the respective at least one temporal sequence (4) of low-level audio features of at least one of their audio segments (3).

3. A method according to claim 2, wherein
said plurality of audio segments (3) are non-overlapping; and
said plurality of audio segments (3) have equal segment duration *Lₛ*, wherein said segment duration is between 1s < *Lₛ* < 60s, more preferably between 5s < *Lₛ* < 30s, more preferably *Lₛ* = 15 s.

4. A method according to any one of claims 2 or 3, further comprising:
determining (1034) the temporal arrangement of said plurality of audio segments (3) for each digital audio signal (2); and
calculating (1033) said audio similarity index (5) between each of said plurality of videos (1) taking into account the temporal arrangement of their respective audio segments (3).

5. A method according to any one of claims 1 to 4, wherein calculating (104) said audio similarity index (5) by comparing said at least one temporal sequence (4) of audio features comprises:
calculating (1043) at least one high-level feature vector *V_{f}* for each digital audio signal (2) or segment (3) by analyzing said at least one temporal sequence (4) of low-level audio features, wherein the elements of said high-level feature vector *V_{f}* each represent a high-level audio feature associated with said digital audio signal (2) or segment (3), and
calculating (1044) the respective pairwise distance *Dₚ* between said high-level feature vectors *V_{f}* in the vector space, wherein the shorter pairwise distance *Dₚ* represents a higher degree of similarity between the respective digital audio signals (2) or segments (3).

6. A method according to claim 5, wherein
each of said high-level feature vectors *V_{f}* comprises *n_{f}* elements, wherein
each of said elements is a real or integer number, and represents one of
a perceived musical characteristic corresponding to the style, genre, rhythm, tempo, or instrumentation; or
a perceived emotional characteristic corresponding to the mood
of the respective digital audio signal (2) or segment (3), and wherein 1 ≤ *n_{f}* ≤ 256, more preferably 1 ≤ *n_{f}* ≤ 100, more preferably 1 ≤ *n_{f}* ≤ 34.

7. A method according to any one of claims 5 or 6, wherein calculating (1044) the respective pairwise distance *Dₚ* between said high-level feature vectors *V_{f}* comprises:
applying (1045) Dynamic Time Warping (DTW) between said high-level feature vectors *V_{f}*,
wherein the shorter pairwise distance *Dₚ* between the respective digital audio signals (2) or segments (3) in the vector space represents a higher degree of similarity.

8. A method according to any one of claims 5 to 7, wherein calculating (1043) said at least one high-level feature vector *V_{f}* for each digital audio signal (2) or segment (3) further comprises:
calculating (1041) at least one 2-dimensional low-level audio feature matrix (8) for each digital audio signal (2) or segment (3) based on their respective at least one temporal sequence (4) of low-level audio features,
feeding (1042) at least one of said low-level audio feature matrices (8) or said digital audio signal (2) or segment (3) into a Machine Learning (ML) engine; and
calculating (1043), using the respective output of said Machine Learning (ML) engine, at least one high-level feature vector *V_{f}* for each digital audio signal (2) or segment (3);
wherein at least one of said low-level audio features is a Mel Frequency Cepstrum Coefficient (MFCC) vector, a Mel-spectrogram, a Constant-Q transform, a Variable-Q transform, or a Short Time Fourier Transform (STFT).

9. A method according to any one of claims 1 to 8, wherein said videos (1) in said initial set comprise pieces of metadata (10), each piece of said metadata (10) comprising textual information associated with the respective video such as title, description, tags, keywords, or MPEG-7 metadata, the method further comprising:
extracting (201) metadata (10) from each of said plurality of videos (1);
calculating (202) a metadata similarity index (11) between each of said plurality of videos (1) based on the degree of similarity between their respective metadata (10);
wherein said ranking (7) of the rest of the initial set of videos (1) is determined (106) by ensembling (203) the calculations of the respective similarity indexes of each video with respect to said seed video.

10. A method according to any one of claims 1 to 9, the method further comprising:
collecting (301) online data (13) by analyzing online sources referring to said plurality of videos (1), said online data (13) representing similarities between said plurality of videos (1) based on at least one of Collaborative Filtering (CF), and associated editorial content;
calculating (302) an online similarity index (14) between each of said plurality of videos (1) based on the online data (13) ;
wherein said ranking (7) of the rest of the initial set of videos (1) is determined (106) by ensembling (303) the calculations of the respective similarity indexes of each video with respect to said seed video.

11. A method according to any one of claims 1 to 10, the method further comprising
receiving (105) said query Q from a user (16);
extracting (401) user preference data (17) associated with said user (16) from a user profile database (18), said user preference data (17) representing said given user's preferences regarding the ranking (7) of said plurality of videos (1);
adjusting (402) said ranking (7) of the rest of the initial set of videos (1) according to said user preference data (17); returning (107) to said user (16), as a reply to said query Q, an ordered set of videos (1) according to said adjusted ranking (7A).

12. A method according to any one of claims 1 to 11, the method further comprising
extracting (501) a digital visual signal (19) from each of said plurality of videos (1);
optionally dividing (502) each digital visual signal (19) into a plurality of visual segments (20), according to the segmentation of the respective digital audio signal (2) of said video;
processing said digital visual signals (19) to calculate (503) at least one visual feature vector *V_{fv}* for each digital visual signal (19) or segment (20);
calculating (504) a visual similarity index (21) between each of said plurality of videos (1) based on the respective pairwise distance *Dₚᵥ* between their associated visual feature vectors *V_{fv}* in the vector space, wherein the shorter pairwise distance *Dₚᵥ* results in a higher visual similarity index (21) between the respective videos (1);
wherein said ranking (7) of the rest of the initial set of videos (1) is determined (106) by ensembling (505) the calculations of the respective similarity indexes of each video with respect to said seed video.

13. A method according to any one of claims 1 to 13, wherein determining (106) said ranking (7) of the rest of the initial set of videos (1) is solely based on the audio similarity index (5) of each video with respect to said seed video.

14. A computer-based system (30) for recommending video content, the system comprising:
a storage medium (31) configured to store a plurality of videos (1);
an input device (36) configured to receive a query Q from a user (16) comprising reference to a seed video, said seed video being one of said plurality of videos (1);
a processor (32) configured to execute the steps of a method according to any one of claims 1 to 13; and
a display device (38) controlled by said processor (32) and configured to show to said user (16), as a reply to said query Q, an ordered set of videos (1) according to the ranking (7) determined by executing the steps of said method.

15. A computer-based system (30) according to claim 14, wherein
said display device (38) is configured to display, as part of a user interface (380), a seed video selector area (384) comprising a plurality of visual representations *T_{1..n},* each visual representation *T* representing one video from an initial set of videos (1),
said input device (36) is configured to allow a user (16) to select one of the visual representations *T* of said videos (1) from the seed video selector area (384), and to send a query Q to a computer-based system (30) comprising a reference to a seed video based according to the selected visual representation (386), and
wherein said display device (38) is further configured to display, as part of said user interface (380), a video recommendation area (389) comprising a plurality of visual representations *T_{1..m}*, wherein each visual representation *T* represents one video (1) from said initial set of videos (1), and wherein said plurality of visual representations *T_{1..m}* are ordered according to a ranking (7) determined by executing the steps of a method according to any one of claims 1 to 13 by said processor (32) on said computer based system (30).

16. A computer-based system (30) according to claim 15, wherein
said display device (38) is further configured to display, as part of said user interface (380), a recommendation adjustment area (390) comprising visual means for dynamically adjusting the order of said visual representations *T_{1..m}* in said video recommendation area (389), wherein said adjustment is achieved by one of
adjusting the weight with which user preference data (17) is taken into account when calculating said ranking (7), or adjusting the weight with which different similarity indexes, such as a metadata similarity index, an online similarity index, or a visual similarity index is taken into account during ensembling calculations for determining said ranking (7),
wherein said visual means comprise at least one of a graphical element (such as a slider) or a numerical input field.
